# EUROPEAN PATENT APPLICATION

(11) **EP 0 549 537 A1**
(43) Date of publication of application: **30.06.1993**
(21) Application number: 92830366.8
(22) Date of filing: 09.07.1992
(51) Int. Cl.: F01N 3/02

(54) **Process for the combustion and purification of motor exhaust gases and/or improve the combustion performance, and apparatus for the process realization**

(30) Priority: 20.12.1991 IT RM910960
(71) Applicant: Cecere, Umberto, I-81020 Casapulla (Caserta) (IT)
(72) Inventor: Cecere, Umberto, I-81020 Casapulla (Caserta) (IT)
(74) Representative: Sneider, Enrico

(57) **Abstract**

The procedure for the purification of the substances produced by combustion and/or for the improvement of combustion performance essentially consists of combining the exhaust gases with outside air, drawing the mixture into a refrigerator unit and compressing it, separating off the cold, accelerated mixture from the water and, should it prove necessary, recycling the gases to the air filter.

In improving combustion performance the procedure is limited to drawing the exhaust gases from the collector, cooling them off and accelerating them as they are introduced into the exhaust unit.

The equipment called for includes a pump, a refrigerator unit and, should purification also be called for, a receptacle or muffler divided into two sections by a diaphragm, together with a tub for separating the liquid from the gases, should this prove necessary.

## Description

It is widely known that the substances produced by the combustion of petrolium products in general, and in particular the substances given off as exhaust by internal combustion engines, are highly polluting, in part because of the uncombusted residues they carry with them, but most importantly because of the chemical substances they contain, such as carbon monoxide, nitrogen dioxide, lead oxide, etc..

A number of techniques have been proposed specifically for the purpose of reducing the harmful effects of motor vehicle exhaust: catalytic mufflers, unleaded gas, fuel produced from plant substances etc., but in practice none of these approaches has met with success, either because of their intrinsic cost and the equipment necessary for their use (the significant cost of a catalytic muffler, for example) or on account of the insufficient quantity of fuel produced, or because of a lack of widespread distribution.

One of the subjects of the present invention is a procedure for treating the combustion gases in general, and in particular the exhaust gases from vehicles with internal combustion engines. The procedure is designed to improve combustion performance while substantially lowering, and possibly eliminating altogether, the level of polluting substances, obtaining through a simple, economical technique an exhaust gas purified of polluting substances, regardless of whether the fuel in question is diesel, normal gasoline or GPL.

Another subject of the invention is the device that makes possible the implementation of the procedure described above.

The procedure contemplated by the invention, through which the exhaust gases are to be treated, regardless of their point of departure or origin, essentially involves combining outside air with the exhaust gases while they are being placed inside a receptacle or a muffler; the mixture of exhaust gases and air is drawn, for example by a pump that both draws in and applies pressure to the mix, forcing it into a piece of equipment, a radiator, that reduces the temperature by cooling the mixture of gases and air to a temperature where the water contained in the mixture is condensed; the condensed gases are separated from the water and eventually recycled to the air filter that feeds the motor or to the burner, as the case may be.

Should the circuit leading from the muffler to the refrigerating unit be obstructed, then the gases are sent to a second receptacle attached to the first, and from here, after being filtered, they are expelled into the outside atmosphere.

In the case of internal combustion engines, the condensed gases can also be mixed with oil vapors, which in this way are not recycled directly into the atmosphere.

Should the principal objective be to improve the performance of the engine, then this is done by taking the exhaust gases as they leave the engine, and in general as they leave the receptacle for exhaust gases, and subjecting them to an appropriate reduction in pressure, so that they are introduced at this reduced pressure into a new setting, where their exit speed is accelerated, for example by raising the pressure above the atmospheric pressure. Having been accelerated and/or compressed in this manner, the gases are introduced into the normal exhaust muffler.

Another subject of the invention is the equipment called for to implement the procedure illustrated above.

The various versions in which the invention can be produced will now be described with reference to the enclosed diagram, which demonstrates how the invention applies to an internal combustion engine;
- Figure 1 shows the device for the implementation of the procedure in its initial version;
- Figure 2 shows a diagram of the equipment needed to implement the procedure in its second version;
- Figure 3 shows a diagram of the equipment needed to implement a variation on the second version of the procedure.

Naturally it is assumed that the description of the device implicitly covers the various versions of the procedure.

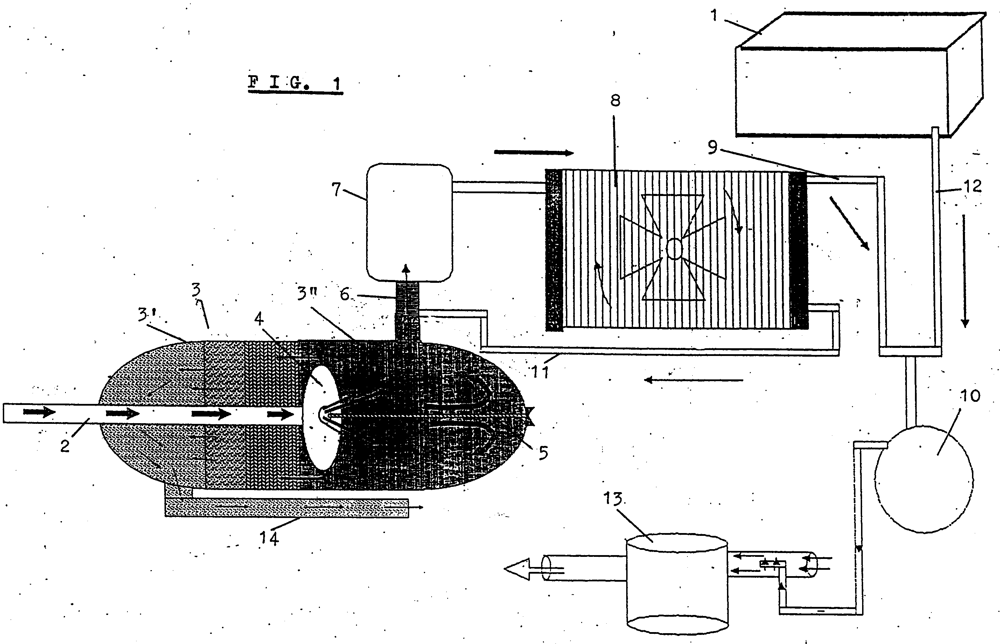

With reference to figure 1, the exhaust gases produced by an internal combustion engine 1 are carried by a pipe into a portion of the device, specifically a muffler 3. This muffler 3 is divided into two sections, 3′ and 3˝, by a diaphragm 4 whose position can be suitably adjusted by using, for example, a regulating screw 5. The exhaust gases that enter the muffler 3 through the pipe 3 reach section 3˝ of the muffler, together with the outside air they carry along with them. Both section 3′ and section 3˝ of the muffler 3 are equipped with filters that can be replaced when necessary and that are preferably made of metal netting and rockwool. The path taken by the gases inside the muffler 3 runs from section 3˝ directly to section 3′.

Section 3˝ is connected by piping 6 to a pump 7 that draws the gases from section 3˝ of the muffler 3 and introduces them, in a compressed state, into a radiator 8, where the gases are cooled. What is produced in section 3˝ amounts to a mixture of exhaust gases and air which, after being compressed by the pump 7 and cooled in the radiator 8, tends to break up into gas and water at the outlet from the radiator 8. The products condensed in the radiator 8 are carried by a pipe 9 into a collection tank 10, while the gases that have not been condensed are recycled to the pump 7 through a pipe 11. In addition the oil vapors given off by the engine 1, which are normally directed towards the engine by means of a valve, can be drawn into the collection tank 10 through a pipe 12.

The condensed gases coming from the radiator 8 and the oil vapors given off by the engine undergo a process of separation in the collection tank 10; specifically, while the gases are carried to the air filter 13 of the engine, and from there to the engine itself, the water is condensed and eliminated.

As mentioned earlier, the exhaust gases, which carry along outside air, are brought inside the muffler 3 by the pipe 2. Here they are drawn in and compressed by the pump 7. If for any reason whatsoever, such as an excess of exhaust gases, it is not possible for all the gases to reach the pump 7, then the gases in section 3" of the muffler flow back through the filters in zone 3′ of the muffler 3, from which, after being filtered, they are expelled into the outside atmosphere through an exhaust tube 14.

In the preceding description of the procedure for purifying the products of combustion, and of the device used to implement the procedure, reference was made to the exhaust gases of an internal combustion engine, regardless of the type of fuel employed. Naturally, however, the invention can be applied equally as well to any type of combustion plant that functions with hydrocarbon, liquid or gasseous fuels and which, as a result, gives off exhaust gas, or simply fumes.

Should the principal objective be to improve the performance of the engine, then only a portion of the equipment referred to above is utilized. In other words, the procedure consists essentially of creating at the point where the exhaust gases leave the motor, preferably inside the gas collector, or at the least possible distance from the collector, an area where the pressure is significantly lower than the pressure of the exhaust gases, so as to lead to a marked drawing in of the exhaust gases as they are given off by the engine. The gases drawn in through this technique are removed from the collector and given a speed and/or a pressure that eases their passage through the muffler normally in use, with the gases first being cooled in cases where this proves necessary.

In a variation on the procedure, the exhaust gases are cooled after they leave the collector so that they will arrive in the reduced-pressure zone at more acceptable temperatures, should the equipment chosen to lower the pressure prove incapable of sustaining the high temperatures at which the gases leave the engine.

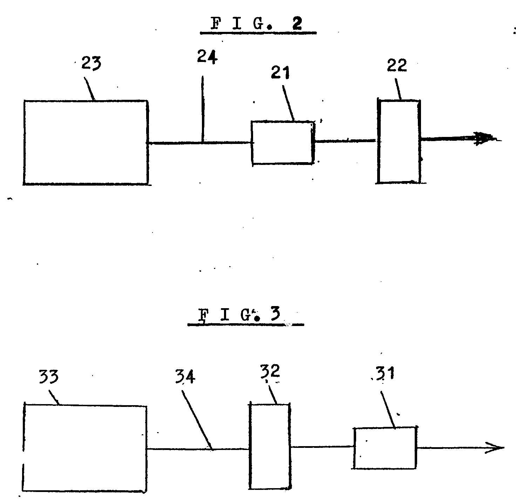

In the specifications for the invention the preferred equipment for implementing the procedure referred to above consists of, as illustrated in figure 2, a pump 21 and, where appropriate, a radiator 22. The exhaust gases are carried from the collector 24 of the engine 23 to the intake end of a pump, preferably a pump that both draws and applies pressure, so as to draw in the gases as they leave the motor, enhancing their flow while reducing the force needed to overcome all the points of passive resistance that the gases would normally encounter in their path.

Given the use of a pump that both draws and applies pressure, the gases that are drawn in are compressed and made to pass through a radiator 22 where they are cooled before being introduced into the normal exhaust circuit formed by the muffler and the related accessories.

As mentioned earlier, and as illustrated by the diagram in figure 3, the exhaust gases coming from the collector 34 are drawn by the pump 31 through a radiator 32, where they are cooled. While this cycle does call for a more powerful intake pump, given the longer path and the greater resistance encountered by the gases as they leave the engine, the system also presents the advantage of introducing the combusted gases into the pump at a reduced temperature, meaning that they do less damage to the pump itself.

So far a description has been given of a pump 21, 31 that serves to draw in the gases from the collector 24, 34 and then send them to the muffler for the next treatment contemplated in the specifications. Obviously, apart from a pump of any type whatsoever (alternating, rotating, capsule-based, etc.) use can be made of other equipment that serves the purpose of creating, on either a continuous or an intermittent basis, a drop in pressure, and preferably a significant drop, in front of the exhaust gases as they leave the collector, compressing them once they have been completely expelled.

Using the procedure based on the invention, it is possible to increase the engine performance, given that no counter-pressures are created on the exhaust gases.

The procedure for purifying the products of combustion and for improving the performance of an internal combustion engine, together with the equipment for implementing such a procedure, have been described and illustrated through general examples that are in no way meant to limit the scope of the invention. Obviously, modifications and variations of the invention are possible in light of the aforementioned descriptions. It should therefore be understood that within the framework of the enclosed claims, the invention can be implemented in a manner different from that specifically described.

## Claims

**1.-** A procedure for purifying the products of combustion, and/or for improving combustion performance, characterized by the fact that it essentially consists of combining outside air with the exhaust gases as they are introduced into a receptacle or a muffler; the gases are kept inside the muffler; the mixture of exhaust gases and air is gathered, for example by a pump that both draws and applies pressure, so as to draw it from the muffler and force it into a piece of equipment, a radiator, that reduces the temperature, cooling the mixture of gases and air to a temperature where the water contained in the mixture condenses; the condensed gases are separated from the water and recycled to the air filter that feeds the engine or to the burner.

**2.-** A procedure that follows the specifications of claim 1, but is distinguished by the fact that, should the circuit from the muffler to the refrigerator become obstructed, then the gases are carried to a second receptacle connected to the first, and from here, after having been filtered, they are expelled into the outside atmosphere.

**3.-** A procedure that follows the specifications of claim 1, but is distinguished by the fact that, in the case of internal combustion engines, the condensed gases can also be combined with oil vapors, which in this way are not recycled directly into the environment.

**4.-** A procedure for improving the performance of an internal combustion engine, characterized by the fact that it essentially consists of creating an area whose pressure is significantly lower than that of the exhaust gases at the point where these gases leave the motor, and preferably in the collector for the gases, or at the least possible distance from the collector, so as to exercise a significant drawing action on the exhaust gases as they are emitted from the motor, with the gases drawn in this manner being removed from the collector and given a speed or a pressure that eases their passage to the exhaust outlet.

**5.-** A procedure that follows the specifications of claim 4, but is characterized by the fact that, in a variation on the procedure, the exhaust gases, at the point where they leave the motor, are cooled, with this cooling of the gases taking place before they reach the unit that creates the drop in pressure, or at a point after this piece of equipment.

**6.-** The equipment for the implementation of the procedure as described in one or more of claims 1 to 4, characterized by the fact that the equipment essentially consists of a receptacle or muffler divided into two portions by a diaphragm; of a pump that draws in the products of the combustion, combining them with outside air and compressing the resulting mixture; of a radiator, or refrigerator, equipped to cool the mixture it receives from the pump; in pipes that carry the cooled mixture of air and exhaust gases to a collecting tub, where the liquid is separated from the gases, with the gases being recovered and transferred to the air filter that feeds the engine.

**7.-** Equipment that follows the specifications of claim 6, but is distinguished by the fact that the position of the diaphragm which divides the muffler into two sections can be adjusted; each section is equipped with filters that can be changed when necessary, and which are preferably produced with metal netting and woolrock; the path taken by the gases through the muffler runs from the portion nearest the pump, where they first arrive, to the portion pointed towards the outside atmosphere.

**8.-** Equipment that follows the specifications of claim 6, but is distinguished by the fact that, should it prove impossible for all or for a part of the mixture of exhaust gases and air to be introduced into the refrigerator, then the excess mixture is removed from the area where it arrives at the muffler and sent flowing back through the filters of the outermost portion of the muffler, from where it is expelled into the outside atmosphere.

**9.-** Equipment for the implementation of the procedure described in claim 4 or claim 5, distinguished by the fact that this equipment essentially consists of a pump and, should it prove necessary, a radiator, with the gases coming from the exhaust-gas collector, which is a part of the motor, being carried to the intake side of the pump, which is preferably a pump that both draws and applies pressure, so as to exercise on the gases leaving the engine a drawing action that eases the flow of the gases, reducing the force needed to overcome the different points of passive resistance that the gases would encounter along their normal path.

**10.-** Equipment that follows the specifications of claim 9, but is distinguished by the fact that it includes a radiator for cooling the exhaust gases, with this radiator being located between the collector and the pump, or after the pump.
